# EUROPEAN PATENT APPLICATION

(11) **EP 4 642 128 A1**
(43) Date of publication of application: **29.10.2025**
(21) Application number: 23905716.9
(22) Date of filing: 07.12.2023
(51) Int. Cl.: H04W 72/0446

(54) **METHOD AND DEVICE USED IN WIRELESS COMMUNICATION**

(30) Priority: 21.12.2022 CN 202211649397
(71) Applicant: SHANGHAI LANGBO COMMUNICATION TECHNOLOGY COMPANY LIMITED, Shanghai 200240 (CN)
(72) Inventor: ZHANG, Jinfang, Shanghai 201206 (CN); ZHANG, Xiaobo, Shanghai 201206 (CN)
(74) Representative: Gunzelmann, Rainer
(86) International application number: PCT/CN2023/137079
(87) International publication number: WO 2024/131549

(57) **Abstract**

Disclosed in the present application are a method and a device used in wireless communication. A first node receives a first signaling, the first signaling indicates a first grant and a first time value; a first type time for each data packet contained in a first set of logical channels is maintained; a first subset of logical channels from the first set of logical channels based on a first set of parameters is selected; resources are allocated to logical channels in the first subset of logical channels in an order from high priority to low priority; a first set of data packets are sent via the first grant, the first set of data packets comprises data packets in logical channels allocated to resources; wherein the first set of parameters comprises the first time value, the first set of data packets comprises at least one first type data packet, the first type time of the first type data packet is not greater than the first time value; the first subset of logical channels comprises at least one logical channel. The present application effectively supports the transmission of delay-sensitive services.

## Description

### Technical Field

The present application relates to a method and apparatus in a wireless communication system, in particular to a method and device for supporting a delay-sensitive service transmission in wireless communication.

### Background Art

In response to the rapidly developing XR (eXtended Reality) usage scenarios and services, the 3GPP (3rd Generation Partner Project) RANI (Radio Access Network 1) has launched the SI (Study Item) for "Study on XR Evaluations for NR" in version 17. The study believes that XR is an important usage scenario and service for version 18 and subsequent versions. XR refers to various types of augmented, virtual and mixed environments, which perform humanmachine communication with the help of handheld and wearable terminal user equipment (UE). Many XR use cases have service characteristics of quasi-periodicity and high data rate, and have stricter delay requirements at the same time, which bring a series of challenges to new radio (NR).

### Summary of the Invention

The inventors have found through researches that in a traditional uplink transmission, a base station allocates uplink resources, and UE allocates resources to logical channels by executing a logical channel prioritization procedure. In this procedure, the UE does not consider whether data packets included in each logical channel are about to expire. For services with strict delay requirements, how to interact delay information through the UE and the base station and use the delay information in the uplink transmission needs to be studied.

In response to the above problems, the present application discloses a solution. By reporting data packet delay information through the UE and using the delay information for resource allocation in the uplink transmission, services with delay requirements can be effectively supported, providing better user experience. In the absence of conflict, the embodiments and features in the embodiments in a first node of the present application can be applied to a second node, and vice versa. In the absence of conflict, the embodiments and features of the embodiments of the present application can be arbitrarily combined with each other. Further, although the original intention of the present application is for the Uu air interface, the present application can also be used for the PC5 air interface. Further, although the original intention of the present application is for the terminal and base station scenario, the present application is also applicable to the relay and base station, and achieves similar technical effects in the terminal and base station scenario. In addition, the use of a unified solution for different scenarios (including but not limited to V2X scenarios and terminal and base station communication scenarios) also helps to reduce hardware complexity and costs. In particular, the interpretation of terminology, nouns, functions, and variables in the present application (if not specifically stated) can refer to the definitions in the 3GPP specification protocols TS36 series, TS38 series, and TS37 series.

The present application discloses a method used in a first node for wireless communication, characterized by comprising:
receiving a first signaling, the first signaling indicating a first grant and a first time value;
maintaining a first type time for each data packet contained in a first set of logical channels;
selecting a first subset of logical channels from the first set of logical channels based on a first set of parameters;
allocating resources to logical channels in the first subset of logical channels in an order from high priority to low priority; and
sending a first set of data packets via the first grant, the first set of data packets comprising data packets in logical channels to which resources are allocated;
wherein the first set of parameters comprises the first time value; the first set of data packets comprises at least one first type data packet, and the first type time of the first type data packet is not greater than the first time value; and the first set of logical channels comprises a plurality of logical channels, and the first subset of logical channels comprises at least one logical channel.

As one embodiment, the above manner is applicable to XR services.

As one embodiment, the above method is applicable to delay-sensitive services.

As one embodiment, the problem to be solved by the present application comprises: how to optimize the transmission of delay-sensitive services.

As one embodiment, the above method can indicate the logical channels that can obtain resource allocation in priority in this scheduling by indicating the first time value in the first signaling, thereby realizing flexible scheduling.

As one embodiment, the above method can prioritize the scheduling of delay-sensitive logical channels by selecting the first subset of logical channels by at least the first time value, which reduces packet loss of the corresponding logical channels, thereby improving transmission efficiency.

As one embodiment, the above method uses the first time value indicated in the received first signaling for logical channel selection, which can enhance the network's control transmitted by the UE's selection of logical channels.

As one embodiment, the above method can increase the scheduling priority of delay-sensitive services.

As one embodiment, the above method can effectively reduce the packet loss of delay-sensitive services.

As one embodiment, the above method enhances the traditional uplink scheduling strategy, thereby achieving more flexible uplink scheduling.

As one embodiment, the above method can effectively support XR services.

According to one aspect of the present application, the method comprises:
any logical channel in the first subset of logical channels comprises at least one of the first type data packets.

As one embodiment, the logical channel comprising the first type data packet obtains priority scheduling, which can reduce the packet loss of the corresponding logical channel.

According to one aspect of the present application, the method comprises:
sending a first message, the first message being used for triggering the first signaling,
wherein the first message indicates a second time value and a first data volume, and the second time value indicates a latest sending time of a data packet of the first data volume.

As one embodiment, the above method indicates a data packet delay status to the network, which is conducive to timely scheduling of the data packet transmission by the network.

As one embodiment, the above method indicates the data volume and the data packet delay status to the network, which is conducive to the reasonable allocation of air interface resources by the network, thereby improving the efficiency of air interface transmission.

According to one aspect of the present application, the method comprises:
the first type time of the first type data packet being not greater than the first time value comprises: the first type time of the first type data packet is not later than the first time value;
wherein the first type time indicates a latest sending time, and the first time value indicates a reference sending time.

As one embodiment, the above method effectively utilizes the information reported by the UE during network scheduling, which can improve the scheduling performance.

According to one aspect of the present application, the method comprises:
the first type time of each data packet contained in the first set of logical channels is a remaining data packet delay budget.

As one embodiment, the first type time of the first type data packet is not greater than the first time value, wherein the first type time indicates the remaining data packet delay budget, and the first time value indicates a reference data packet delay budget.

According to one aspect of the present application, the method comprises:
receiving a first PDCP SDU from an upper layer, the first PDCP SDU being used for generating a first data packet, and the first data packet being any data packet contained in the first set of logical channels,
wherein the first PDCP SDU is associated with a third time value, and at least the latter of a residence time of the first PDCP SDU at the first node and the third time value is used for determining the first type time of the first data packet.

According to one aspect of the present application, the method comprises:
subtracting a first offset value from a first type variable of a first logical channel, the first offset value being related to whether the first type variable of the first logical channel is greater than 0,
wherein the first logical channel is one of the logical channels to which resources are allocated in the first subset of logical channels.

As one embodiment, when the first type variable of the first logical channel is greater than 0, the first offset value is related to the resources allocated to the first logical channel.

As one embodiment, when the first type variable of the first logical channel is not greater than 0, the first offset value is related to not only the resources allocated to the first logical channel, but also a fourth offset value.

As one embodiment, the above method can improve scheduling fairness.

As one embodiment, the above method is innovative to the LCP (Logical Channel Prioritization) procedure in traditional uplink scheduling.

As one embodiment, the fourth offset value is configured by the network.

As one embodiment, the fourth offset value is pre-configured.

As one embodiment, the fourth offset value is a fixed value.

As one embodiment, the fourth offset value is a variable value.

The present application discloses a method used in a second node for wireless communication, characterized by comprising:
sending a first signaling, the first signaling indicating a first grant and a first time value; and
wherein the first type time of each data packet contained in the first set of logical channels is maintained; a first subset of logical channels is selected from the first set of logical channels according to a first set of parameters; resources are allocated to logical channels in the first subset of logical channels in an order from high priority to low priority; a first set of data packets is sent through the first grant, the first set of data packets comprising data packets in the logical channels to which resources are allocated; the first set of parameters comprises the first time value; the first set of data packets comprises at least one first type data packet, and the first type time of the first type data packet is not greater than the first time value; and the first set of logical channels comprises a plurality of logical channels, and the first subset of logical channels comprises at least one logical channel.

According to one aspect of the present application, the method comprises:
any logical channel in the first subset of logical channels comprises at least one of the first type data packets.

According to one aspect of the present application, the method comprises:
receiving a first message, the first message being used for triggering the first signaling,
wherein the first message indicates a second time value and a first data volume, and the second time value indicates a latest sending time of a data packet of the first data volume.

According to one aspect of the present application, the method comprises:
the first type time of the first type data packet being not greater than the first time value comprises: the first type time of the first type data packet is not later than the first time value;
wherein the first type time indicates a latest sending time, and the first time value indicates a reference sending time.

According to one aspect of the present application, the method comprises:
the first type time of each data packet contained in the first set of logical channels is a remaining data packet delay budget.

According to one aspect of the present application, the method comprises:
receiving a first PDCP SDU from an upper layer, the first PDCP SDU being used for generating a first data packet, and the first data packet being any data packet contained in the first set of logical channels;
wherein the first PDCP SDU is associated with a third time value, and at least the latter of a residence time of the first PDCP SDU at a recipient of the first signaling and the third time value is used for determining the first type time of the first data packet.

According to one aspect of the present application, the method comprises:
subtracting a first offset value from a first type variable of the first logical channel, the first offset value being related to whether the first type variable of the first logical channel is greater than 0,
wherein the first logical channel is one of the logical channels to which resources are allocated in the first subset of logical channels.

The present application discloses a first node used in wireless communication, characterized by comprising:
a first receiver for receiving a first signaling, the first signaling indicating a first grant and a first time value; and
a first transmitter for maintaining a first type time for each data packet contained in a first set of logical channels; selecting a first subset of logical channels from the first set of logical channels based on a first set of parameters; allocating resources to logical channels in the first subset of logical channels in an order from high priority to low priority; and sending a first set of data packets via the first grant, the first set of data packets comprises data packets in logical channels allocated to resources,
wherein the first set of parameters comprises the first time value; the first set of data packets comprises at least one first type data packet, and the first type time of the first type data packet is not greater than the first time value; and the first set of logical channels comprises a plurality of logical channels, and the first subset of logical channels comprises at least one logical channel.

The present application discloses a second node used in wireless communication, characterized by comprising:
a second transmitter for sending a first signaling, the first signaling indicating a first grant and a first time value,
wherein the first type time of each data packet contained in the first set of logical channels is maintained; a first subset of logical channels is selected from the first set of logical channels according to a first set of parameters; resources are allocated to logical channels in the first subset of logical channels in an order from high priority to low priority; a first set of data packets is sent through the first grant, the first set of data packets comprising data packets in the logical channels to which resources are allocated; the first set of parameters comprises the first time value; the first set of data packets comprises at least one first type data packet, and the first type time of the first type data packet is not greater than the first time value; and the first set of logical channels comprises a plurality of logical channels, and the first subset of logical channels comprises at least one logical channel.

### Brief Description of the Drawings

By reading the detailed description of the non-limiting embodiments made with reference to the following figures, other features, purposes and advantages of the present application will become more apparent:
FIG. 1 illustrates a flowchart of a signal transmission of a first node according to one embodiment of the present application;
FIG. 2 illustrates a schematic diagram of a network architecture according to one embodiment of the present application;
FIG. 3 illustrates a schematic diagram of a wireless protocol architecture of a user plane and a control plane according to one embodiment of the present application;
FIG. 4 illustrates a schematic diagram of a hardware module of a communication device according to one embodiment of the present application;
FIG. 5 illustrates a flowchart of one wireless signal transmission according to one embodiment of the present application;
FIG. 6 illustrates a schematic diagram of a relationship between a first time value and a first type time of a first type data packet according to one embodiment of the present application;
FIG. 7 illustrates a schematic diagram of a relationship between a first time value and a first type time of a first type data packet according to one embodiment of the present application;
FIG. 8 illustrates a schematic diagram of a relationship among a third time value, a residence time of a first PDCP SDU at a first node, and a first type time of a first data packet according to one embodiment of the present application;
FIG. 9 illustrates a schematic diagram of a relationship between a first type variable of a first logical channel and a first offset value according to one embodiment of the present application;
FIG. 10 illustrates a schematic diagram of a relationship between a first type variable of a first logical channel and a first offset value according to one embodiment of the present application;
FIG. 11 illustrates a structural block diagram of a processing apparatus in a first node according to one embodiment of the present application; and
FIG. 12 illustrates a structural block diagram of a processing apparatus in a second node according to one embodiment of the present application.

### Detailed Description of Embodiments

The technical solution of the present application will be further described in detail below in conjunction with the accompanying drawings. It should be noted that, in the absence of conflict, the embodiments of the present application and the features in the embodiments can be arbitrarily combined with each other.

### Embodiment 1

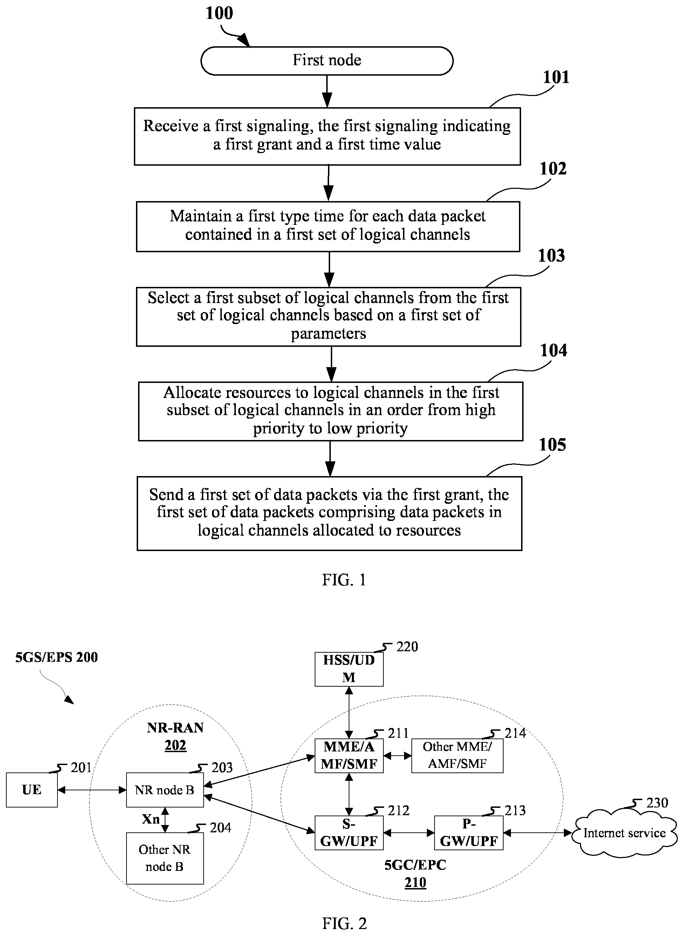

Embodiment 1 illustrates a flowchart of a signal transmission of a first node according to one embodiment of the present application, as shown in FIG. 1.

In Embodiment 1, the first node 100 receives a first signaling in step 101, the first signaling indicating a first grant and a first time value; maintains a first type time of each data packet contained in a first set of logical channels in step 102; selects a first subset of logical channels from the first set of logical channels according to a first set of parameters in step 103; allocates resources to the logical channels in the first subset of logical channels in an order from high priority to low priority in step 104; and sends a first set of data packets through the first grant in step 105, the first set of data packets comprising data packets in the logical channels to which resources are allocated, wherein the first set of parameters comprises the first time value; the first set of data packets comprises at least one first type data packet, and the first type time of the first type data packet is not greater than the first time value; and the first set of logical channels comprises a plurality of logical channels, and the first subset of logical channels comprises at least one logical channel.

As one embodiment, the first signaling is received through an air interface.

As one embodiment, the air interface is a Uu air interface.

As one embodiment, the air interface is a PC5 air interface.

As one embodiment, the first signaling is a physical layer signaling.

As one embodiment, the first signaling is a scheduling signaling.

As one embodiment, the first signaling is a dynamic scheduling signaling.

As one embodiment, the first signaling is a configuration scheduling signaling.

As one embodiment, the first signaling is a PDCCH (Physical Downlink Control CHannel).

As one embodiment, the first signaling is DCI (Downlink Control Information).

As one embodiment, the first signaling indicates a first grant.

As one embodiment, the first grant is an uplink grant.

As one embodiment, the uplink grant is used for an uplink transmission.

As one embodiment, the first grant is a sidelink grant.

As one embodiment, the sidelink grant is used for a sidelink transmission.

As one embodiment, the first signaling is scrambled by a C-RNTI (Cell- Radio Network Temporary Identifier).

As one embodiment, the first signaling is scrambled by CS (Configured Scheduling)-RNTI.

As one sub-embodiment of the above two embodiments, the first grant is an uplink grant.

As one embodiment, the first signaling is scrambled by an SL (Sidelink)-RNTI.

As one embodiment, the first signaling is scrambled by an SLCS (Sidelink Configured Scheduling)-RNTI.

As one sub-embodiment of the above two embodiments, the first grant is a sidelink grant.

As one embodiment, the first grant comprises air interface resources for a wireless transmission.

As one embodiment, the first grant comprises at least one of time domain resources, frequency domain resources, MCS (Modulation and Coding Scheme), HARQ (Hybrid Automatic Repeat Request) process numbers, and NDI (New Data Indication).

As one embodiment, the first signaling indicates a new sending.

As one embodiment, the first signaling comprises a first time value.

As one embodiment, the first signaling explicitly indicates the first time value.

As one embodiment, the first signaling comprises a first field, the first field indicating the first time value.

As one embodiment, the first signaling comprises a first field, the first field indicating a first index, and a value indicated by the first index in the first list being the first time value.

As one embodiment, the first signaling implicitly indicates the first time value.

As one embodiment, the first signaling indicates the first time value through 1 bit.

As one sub-embodiment of the above two embodiments, the first time value is the minimum value of the first type time of each data packet contained in the first set of logical channels.

As one sub-embodiment of the above two embodiments, when the 1 bit is set to 1, the first time value is indicated; and when the 1 bit is set to 0, the first time value is not indicated.

As one sub-embodiment of the above two embodiments, when the 1 bit is set to 0, the first time value is indicated; and when the 1 bit is set to 1, the first time value is not indicated.

As one sub-embodiment of the above two embodiments, when the 1 bit exists, the first time value is indicated; and when the 1 bit does not exist, the first time value is not indicated.

As one embodiment, the first time value indicates a PSDB (PDU Set Delay Budget).

As one embodiment, the first time value indicates a reference data packet delay budget (PDB).

As one embodiment, the first time value indicates a reference sending time.

As one embodiment, the first time value indicates a reference sending slot.

As one embodiment, the first type time of each data packet contained in a first set of logical channels is maintained.

As one embodiment, each data packet contained in the first set of logical channels is a MAC (Medium Access Control) SDU (Service Data Unit).

As one embodiment, maintaining the first type time of each data packet contained in the first set of logical channels comprises: maintaining a timer associated with each data packet contained in the first set of logical channels, wherein a current value of a timer associated with one data packet is used for determining the first type time of the data packet.

As one embodiment, a timer associated with one data packet is maintained at a PDCP (Packet Data Convergence Protocol) sublayer.

As one embodiment, maintaining the first type time of each data packet contained in the first set of logical channels comprises: starting one timer when receiving one PDCP SDU from an upper layer, wherein at least part of the bits of the one PDCP SDU are used for generating one MAC SDU, and the one MAC SDU belongs to the first set of logical channels; after being started, the one timer is in a running state, and the current value of the one timer is used for determining the first type time of one associated MAC SDU.

As one embodiment, maintaining the first type time of each data packet contained in the first set of logical channels comprises: starting one timer when receiving one PDU (Protocol Data Unit) set from an upper layer, wherein at least part of the bits of each PDU in the PDU set are used for generating one MAC SDU, and the one MAC SDU belongs to the first set of logical channels; and after being started, the one timer is in a running state, and the current value of the one timer is used for determining the first type time of one associated MAC SDU.

As one embodiment, the current value of one timer being used for determining the first type time of one associated data packet comprises: the current value of the one timer being the first type time of one associated data packet.

As one sub-embodiment of the above embodiment, the first type time of one data packet is a remaining data packet delay budget of the data packet.

As one sub-embodiment of the above embodiment, the first type time of one data packet is a remaining residence time of the data packet at the first node.

As one embodiment, maintaining the first type time of each data packet contained in the first set of logical channels comprises: maintaining a timer associated with each data packet contained in the first set of logical channels, wherein an expiration value of a timer associated with one data packet is used for determining the first type time of the data packet.

As one embodiment, the expiration value of one timer being used for determining the first type time of one associated data packet comprises: the sum of a time of receiving one PDCP SDU and the expiration value of one timer being the first type time of one associated data packet, wherein at least part of the bits of the PDCP SDU are used for generating one data packet, and the one data packet is one MAC SDU.

As one embodiment, the expiration value of one timer being used for determining the first type time of one associated data packet comprises: the sum of a slot of receiving one PDCP SDU and the number of slots indicated by the expiration value of one timer being the first type time of one associated data packet, wherein at least part of the bits of the one PDCP SDU are used for generating the data packet, and the one data packet is one MAC SDU.

As one sub-embodiment of the above two embodiments, the first type time of one data packet is a latest sending time of the data packet.

As one sub-embodiment of the above two embodiments, the first type time of one data packet is a latest sending slot of the data packet.

As one embodiment, if one data packet is received in the first slot of the second frame, and the expiration value of the timer associated with the one data packet indicates 4 slots, the first type time of the data packet is the fifth slot of the second frame.

As one embodiment, maintaining the timer associated with each data packet contained in the first set of logical channels comprises: starting one timer when receiving one PDCP SDU from an upper layer, wherein at least part of the bits of the one PDCP SDU are used for generating one MAC SDU, and the one MAC SDU belongs to the first set of logical channels; the one timer is in a running state after being started, when the one timer is running, the one timer is updated at each first time interval, and when the one timer expires, the updating of the one timer at each first time interval is stopped.

As one embodiment, when starting the one timer, the value of the one timer is set to 0, and the phrase "updating the one timer" comprises: incrementing the value of the one timer by 1; and when the value of the one timer is the expiration value of the one timer, the one timer expires.

As one embodiment, when starting the one timer, the value of the one timer is set to the expiration value of the one timer, and the phrase "updating the one timer" comprises: decrementing the value of the one timer by 1; and when the value of the one timer is 0, the one timer expires.

As one embodiment, the upper layer is a layer above the PDCP sublayer.

As one embodiment, the timer is maintained at the PDCP sublayer.

As one embodiment, the timer is a discardTimer (discard timer).

As one embodiment, the timer is a PDUsetDiscardTimer (PDU set discard timer).

As one embodiment, when the timer expires, a data packet associated with the timer is discarded.

As one embodiment, when the timer expires, a PDU set associated with the timer is discarded.

As one embodiment, the first time interval is 1 millisecond.

As one embodiment, the first time interval is one subframe.

As one embodiment, the first time interval is one slot.

As one embodiment, one timer is in a running state after being started; and the one timer stops running after expiration.

As one embodiment, the expiration value of the timer associated with each data packet contained in the first set of logical channels is configured by the network.

As one embodiment, the expiration value of the timer associated with each data packet in a logical channel is the same, wherein the one logical channel is one of those in the first set of logical channels.

As one embodiment, the expiration values of timers associated with at least two data packets in one logical channel are different, wherein the one logical channel is one of those in the first set of logical channels.

As one embodiment, a data packet belonging to the first set of logical channels means that one data packet is sent through one logical channel in the first set of logical channels at the lower layer.

As one embodiment, the first set of logical channels comprises a plurality of logical channels.

As one embodiment, a first subset of logical channels is selected from the first set of logical channels according to a first set of parameters, and the first subset of logical channels comprises at least one logical channel.

As one embodiment, the data packets included in the first set of logical channels have the same recipient.

As one embodiment, the first set of logical channels is established for the same node.

As one embodiment, the first set of logical channels is associated with the same radio bearer.

As one embodiment, the first set of logical channels is associated with the same PDU session.

As one embodiment, the logical channels in the first set of logical channels meet at least the following 7 conditions simultaneously: the first condition is that if configured, a set of allowed subcarrier spacing index valuesconfigured in the allowedSCS-list comprises the subcarrier spacing index associated with the first grant; the second condition is that if configured, the configured maximum physical uplink shared channel duration (maxPUSCH-Duration) is not less than the PUSCH transmission duration associated with the first grant; the third condition is that if configured, if the first grant is a configured grant type 1, the configured configuredGrantTypelAllowed is set to be true; the fourth condition is that if configured, the configured allowedServingCells comprise the cell information associated with the first grant; the fifth condition is that if configured, the configured allowedCG-list comprises the configured grant index associated with the first grant; the sixth condition is that if configured, the configured allowedPHY-PriorityIndex comprises the priority index associated with the first grant; and the seventh condition is that if configured, the configured allowed HARQ mode (allowedHARQ-mode) comprises the uplink HARQ mode (uplinkHARQ-mode) of the HARQ process associated with the first grant, wherein the fourth condition is not applied to a data radio bearer in which PDCP (Packet Data Convergence Protocol) duplications (e.g., CA (carrier aggregation) duplications) are configured in the MAC entity of the first node but the CA duplications are deactivated in the MAC entity.

As one sub-embodiment of the above embodiment, the first set of logical channels is used for a Uu air interface transmission.

As one embodiment, the first set of logical channels is for the same destination recipient; If SL DRX (Discontinuous Reception) is configured, the destination recipient is in an active time; one MAC control element (CE) sent to the destination recipient and the logical channels have the highest priority; the logical channels in the first set of logical channels meet at least the following 5 conditions simultaneously: the first condition is that there is sidelink data waiting to be sent; the second condition is that the SBj of the logical channel is greater than 0; the third condition is that if configured, the configured sl-configuredGrantType 1 Allowed is set to be true when the first grant is sidelink configuration grant type 1; the fourth condition is that if configured, the configured sl-allowedCG-list comprises the Configured Grant index associated with the first grant; and the fifth condition is that if the SCI associated with the first grant is not configured with a PSFCH (Physical Sidelink Feedback CHannel), the sl-HARQ-FeedbackEnabled is set to be disabled.

As one embodiment, the first set of logical channels is for the same destination recipient; If SL DRX is configured, the destination recipient is in an active time; the logical channels in the first set of logical channels meet at least the following 4 conditions simultaneously: the first condition is that there is sidelink data waiting to be sent; the second condition is that if configured, the configured sl-configuredGrantTypelAllowed is set to be true when the first grant is a sidelink configuration grant type 1; the third condition is that the configured sl-allowedCG-list comprises the Configured Grant index associated with the first grant; and the fourth condition is that if the SCI associated with the first grant is configured with a PSFCH, at this time, if the sl-HARQ-FeedbackEnabled of the logical channel with the highest priority of the destination recipient is set to be enabled, the sl-HARQ-FeedbackEnabled of the logical channel is set to be enabled; if the sl-HARQ-FeedbackEnabled of the logical channel with the highest priority of the destination recipient is set to be disabled, the sl-HARQ-FeedbackEnabled of the logical channel is set to be disabled; and if the SCI associated with the first grant is not configured with a PSFCH, the sl-HARQ-FeedbackEnabled of the logical channel is set to be disabled.

As one sub-embodiment of the above two embodiments, the first set of logical channels is used for a PC5 air interface transmission.

As one sub-embodiment of the above two embodiments, the destination recipient of the first set of logical channels is one of a plurality of recipients.

As one embodiment, any logical channel in the first set of logical channels is allowed to use the TTI (transmission time interval) length allocated by the first grant.

As one embodiment, any logical channel in the first set of logical channels meets the conditions in Section 5.4.3.1.2 of 3GPP protocol 38.321, wherein the first grant is an uplink grant.

As one embodiment, any logical channel in the first set of logical channels meets the conditions in Section 5.22.1.4.1.2 of 3GPP protocol 38.321, wherein the first grant is a sidelink grant.

As one embodiment, the first set of parameters comprises the first time value.

As one embodiment, the first set of parameters comprises the first type time of each data packet contained in the first set of logical channels.

As one embodiment, the first set of parameters comprises the priority of each logical channel in the first set of logical channels configured by the network.

As one embodiment, the larger the value of the priority of a logical channel configured by the network, the lower the priority of the logical channel configured by the network.

As one embodiment, the first set of parameters comprises the first type variable of each logical channel in the first set of logical channels.

As one embodiment, the first subset of logical channels is selected from the first set of logical channels, any logical channel in the first subset of logical channels comprises at least one data packet, and the first type time of the at least one data packet is not greater than the first time value.

As one embodiment, the first subset of logical channels is selected from the first set of logical channels, and any logical channel in the first subset of logical channels comprises at least one first type data packet.

As one embodiment, the first subset of logical channels is selected from the first set of logical channels, and any logical channel in the first subset of logical channels meets at least one condition in a first condition set.

As one embodiment, the first condition set comprises: comprising at least one data packet, the first type time of the at least one data packet being not greater than the first time value.

As one embodiment, the first condition set comprises: maintaining the first type variable to be greater than 0.

As one embodiment, at least one logical channel in the first subset of logical channels comprises at least one of the first type data packets.

As one embodiment, at least one logical channel in the first subset of logical channels does not comprise the first type data packet.

As one embodiment, resources are allocated to each logical channel in the first subset of logical channels in an order from high priority to low priority.

As one embodiment, resources are firstly allocated to the logical channel with the highest priority in the first subset of logical channels; resources are secondly allocated to the logical channel with the second highest priority in the first subset of logical channels; and so on, no further details will be given.

As one embodiment, the priority is the priority of the logical channel.

As one embodiment, the priority of the logical channel is fixed.

As one embodiment, the priority of the logical channel is variable.

As one embodiment, the priority of the logical channel is determined by the first type time of the data packet contained in the logical channel.

As one embodiment, the smaller the minimum value of the first type time of the data packet contained in a logical channel, the higher the priority of the logical channel; and the larger the minimum value of the first type time of the data packet contained in a logical channel, the lower the priority of the logical channel.

As one embodiment, the first node comprising 3 logical channels is taken as an example, wherein the first logical channel comprises 5 data packets, and the first type time corresponding to the 5 data packets is 10, 14, 15, 15, 20, respectively, and the minimum value of the first type time of the data packets included in the first logical channel is 10; assuming that the minimum value of the first type time of the data packets included in the second logical channel is 3, and the minimum value of the first type time of the data packets included in the third logical channel is 5, the second logical channel has the highest priority.

As one embodiment, the priority of the logical channel is determined by the priority configured by the network.

As one embodiment, when any logical channel in the first subset of logical channels meets at least one condition in the first condition set, the priority of a first type logical channel is higher than the priority of the second type logical channel, wherein one first type logical channel comprises at least one data packet, and the first type time of the at least one data packet is not greater than the first time value; a second type logical channel comprises at least one data packet, and the first type time of the at least one data packet is greater than the first time value and the first type variable of the second type logical channel is greater than 0; among a plurality of first type logical channels, the priority of a first type logical channel is determined by the first type time of the data packet contained in the first type logical channel; among a plurality of second type logical channels, the priority of a second type logical channel is determined by the priority configured by the network, wherein the first condition set comprises: comprising a condition that the first type time of at least one data packet is not greater than the first time value, and a condition that the first type variable maintained is greater than 0.

As one embodiment, the same resources are allocated to logical channels with the same priority in the first subset of logical channels.

As one embodiment, the resources allocated to the logical channels in the first subset of logical channels are determined by the first node itself.

As one embodiment, the resources allocated to the logical channels in the first subset of logical channels are related to the number of data packets included in the logical channel, wherein the first type time of the data packet is not greater than the first time value.

As one embodiment, the resources allocated to the logical channels in the first subset of logical channels are related to the number of first type data packets included in the logical channel.

As one embodiment, allocating resources to the logical channels in the first subset of logical channels comprises: selecting data packets from the first subset of logical channels for sending.

As one embodiment, the resources allocated to one logical channel are used for sending at least 1 byte.

As one embodiment, the resources allocated to one logical channel are used for sending a MAC SDU or a MAC SDU segment.

As one embodiment, when the PBR (Prioritized Bit Rate) of a logical channel in the first subset of logical channels is configured as infinity, after allocating resources to all data packets of the logical channel, resources are allocated to logical channels whose priority is lower than that of the logical channel in the first subset of logical channels.

As one embodiment, after allocating resources to the logical channels in the first subset of logical channels, if there are still resources remaining, resources are allocated to the logical channels in the first set of logical channels in an order from a high priority to a low priority of logical channels configured by the network, until there are no more data packets in the logical channels or the resources of the first grant are exhausted.

As one embodiment, the resources comprise air interface resources.

As one embodiment, the resources comprise time-frequency resources.

As one embodiment, the resources comprise spatial domain resources.

As one embodiment, the resources comprise code domain resources.

As one embodiment, the resources comprise uplink resources.

As one embodiment, the resources comprise sidelink resources.

As one embodiment, a first set of data packets is sent through the first grant, and the first set of data packets comprises data packets in the logical channels to which resources are allocated.

As one embodiment, the first set of data packets is assembled into the same MAC PDU.

As one embodiment, the phrase "sending the first set of data packets through the first grant" comprises: sending the first set of data packets through the air interface resources indicated by the first grant.

As one embodiment, the phrase "sending the first set of data packets through the first grant" comprises: sending a wireless signal through the air interface resources indicated by the first grant, the wireless signal comprising the first set of data packets.

As one embodiment, the first set of data packets comprises at least one data packet.

As one embodiment, the logical channel to which resources are allocated belongs to the first subset of logical channels.

As one embodiment, the at least one logical channel to which resources are allocated does not belong to the first subset of logical channels.

As one embodiment, the first set of data packets comprises at least one first type data packet.

As one embodiment, the first set of data packets comprises only the first type data packets.

As one embodiment, the first set of data packets comprises a non-first type data packet.

As one embodiment, the first type time of the first type data packet is not greater than the first time value.

As one embodiment, "the first type time of the first type data packet is not greater than the first time value" comprises: the remaining data packet delay budget of the first type data packet is not greater than the first time value, wherein the first time value indicates the reference data packet delay budget.

As one embodiment, "the first type time of the first type data packet is not greater than the first time value" comprises: the latest sending time of the first type data packet is not later than the first time value, wherein the first time value indicates the reference sending time.

### Embodiment 2

Embodiment 2 illustrates a schematic diagram of a network architecture according to one embodiment of the present application, as shown in FIG. 2. FIG. 2 illustrates a diagram of a network architecture 200 of NR 5G, LTE (Long-Term Evolution) and LTE-A (Long-Term Evolution Advanced) systems. The NR 5G, LTE or LTE-A network architecture 200 may be referred to as a 5GS (5G System)/EPS (Evolved Packet System) 200 or some other suitable terminology. The 5GS/EPS 200 may comprise one or more pieces of user equipment (UE) 201, a NG-RAN (next generation radio access network) 202, a 5GC (5G Core Network)/EPC (Evolved Packet Core) 210, an HSS (Home Subscriber Server)/UDM (Unified Data Management) 220, and Internet services 230. The 5GS/EPS may be interconnected with other access networks, but these entities/interfaces are not shown for simplicity. As shown in the figure, the 5GS/EPS provides packet switching services. However, those skilled in the art will readily appreciate that the various concepts presented throughout the present application may be extended to networks providing circuit switching services or other cellular networks. The NG-RAN comprises an NR Node B (gNB) 203 and other gNB204. The gNB203 provides user and control plane protocol termination towards the UE201. The gNB203 can be connected to the other gNB204 via an Xn interface (e.g., a backhaul link). The XnAP protocol of the Xn interface is used for transmitting control plane messages of the wireless network, and the user plane protocol of the Xn interface is used for transmitting user plane data. The gNB203 may also be referred to as a base station, a base transceiver station, a radio base station, a radio transceiver, a transceiver function, a basic service set (BSS), an extended service set (ESS), a transmission reception point (TRP), or some other appropriate terms. In a non-terrestrial network (NTN), the gNB203 may be a satellite, an aircraft, or a ground-based base station relayed via a satellite. The gNB203 provides an access point to the 5GC/EPC210 for the UE201. Examples of the UE201 comprise a cellular phone, a smart phone, a session initiation protocol (SIP) phone, a laptop computer, a personal digital assistant (PDA), a satellite radio, a global positioning system, a multimedia device, a video device, a digital audio player (e.g., an MP3 player), a camera, a game console, a drone, an aircraft, a narrowband Internet of Things device, a machine type communication device, a land vehicle, an automobile, an invehicle device, a vehicle communication unit, a wearable device, or any other similarly functional device. Those skilled in the art may also refer to the UE201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terminology. The gNB203 is connected to the 5GC/EPC210 via the S1/NG interface. The 5GC/EPC210 comprises an MME (Mobility Management Entity)/AMF (Authentication Management Field)/SMF (Session Management Function) 211, other MME/AMF/SMF214, a S-GW (Service Gateway)/UPF (User Plane Function) 212, and a P-GW (Packet Data Network Gateway)/UPF213. The MME/AMF/SMF211 is a control node that handles a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides the UE with IP address allocation and other functions. The P-GW/UPF213 is connected to the Internet services 230. The Internet services 230 comprise the operator's corresponding Internet protocol services, which may specifically comprise the Internet, intranet, IP multimedia subsystem (IMS), and packet switching (PS) streaming services.

As one embodiment, the UE201 corresponds to the first node in the present application.

As one embodiment, the gNB203 corresponds to the second node in the present application.

As one embodiment, the UE201 is user equipment.

As one embodiment, the UE201 is Layer 2 U2N remote UE.

As one embodiment, the gNB203 is a macro cell base station.

As one embodiment, the gNB203 is a micro cell base station.

As one embodiment, the gNB203 is a pico cell base station.

As one embodiment, the gNB203 is a femtocell.

As one embodiment, the gNB203 is a base station device supporting large delay difference.

As one embodiment, the gNB203 is one flying platform device.

As one embodiment, the gNB203 is a satellite device.

As one embodiment, the gNB203 is a test device (e.g., a transceiving apparatus simulating some functions of a base station, a signaling tester).

As one embodiment, the wireless link from the UE201 to the gNB203 is an uplink, and the uplink is used to perform an uplink transmission.

As one embodiment, the wireless link from the gNB203 to the UE201 is a downlink, and the downlink is used to perform a downlink transmission.

As one embodiment, the UE201 and the gNB203 are connected via a Uu air interface.

Not shown in the figure, the UE201 is connected to another UE via a PC5 air interface.

### Embodiment 3

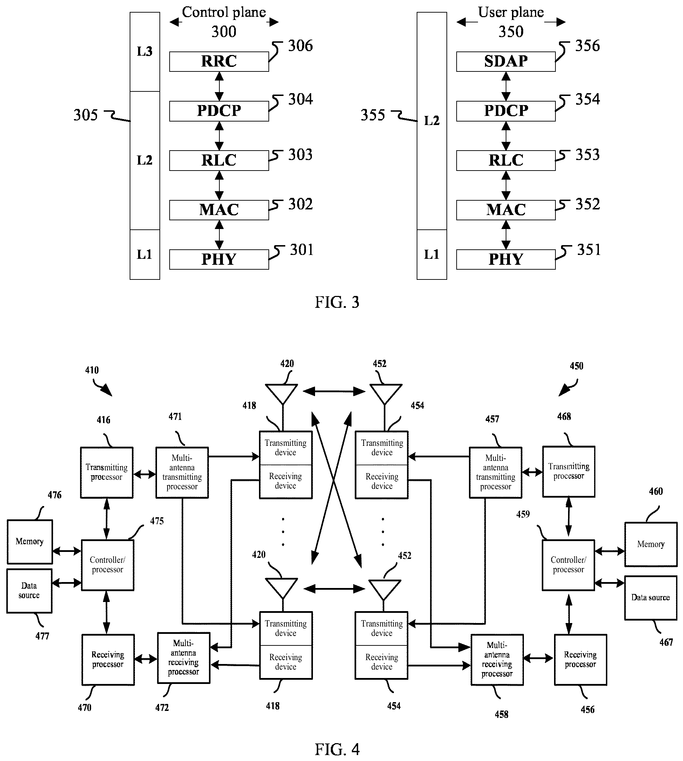

Embodiment 3 illustrates a schematic diagram of a wireless protocol architecture for a user plane and a control plane according to one embodiment of the present application, as shown in FIG. 3. FIG. 3 is a schematic diagram illustrating an embodiment of a wireless protocol architecture for a user plane 350 and a control plane 300. FIG. 3 shows the wireless protocol architecture of the control plane 300 of UE and gNB inthree layers: Layer 1, Layer 2, and Layer 3. The Layer 1 (L1 layer) is the lowest layer and implements various PHY (physical layer) signal processing functions. The L1 layer will be referred to as a PHY301 herein. The Layer 2 (L2 layer) 305 is above the PHY301 and is responsible for the link between the UE and the gNB through the PHY301. The L2 layer 305 comprises a MAC (Medium Access Control) sublayer 302, an RLC (Radio Link Control) sublayer 303, and a PDCP (Packet Data Convergence Protocol) sublayer 304, which terminate at the gNB on the network side. The PDCP sublayer 304 provides data encryption and integrity protection. The PDCP sublayer 304 also provides support for handovers of the UE between gNBs. The RLC sublayer 303 provides segmentation and reassembly of data packets, and retransmission of lost data packets through ARQ (Automatic Repeat Request). The RLC sublayer 303 also provides duplicate data packet detection and protocol error detection. The MAC sublayer 302 provides mapping between logical channels and transport channels and multiplexing of logical channels. The MAC sublayer 302 is also responsible for allocating various radio resources (e.g., resource blocks) in a cell between UE. The MAC sublayer 302 is also responsible for HARQ (Hybrid Automatic Repeat Request) operations. The RRC (Radio Resource Control) sublayer 306 in the Layer 3 (L3 layer) of the control plane 300 is responsible for obtaining wireless resources (i.e., radio bearers) and configuring the lower layers using an RRC signaling between the gNB and the UE. The wireless protocol architecture of the user plane 350 comprises the Layer 1 (L1 layer) and the Layer 2 (L2 layer). The wireless protocol architecture in the user plane 350 is substantially the same as the corresponding layers and sublayers in the control plane 300 for the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for upper layer data packets to reduce wireless transmission overhead. The L2 layer 355 in the user plane 350 also comprises a SDAP (Service Data Adaptation Protocol) sublayer 356, and the SDAP sublayer 356 is responsible for mapping between QoS streams and data radio bearers (DRBs) to support the diversity of services. The wireless protocol architecture of the UE in the user plane 350 may comprise, at the L2 layer, a SDAP sublayer 356, a PDCP sublayer 354, some or all protocol sublayers of the RLC sublayer 353 and the MAC sublayer 352. Although not shown, the UE may also have several upper layers above the L2 layer 355, comprising a network layer (e.g., IP layer) terminated at the P-GW on the network side and an application layer terminated at the other end of the connection (e.g., remote UE, a server, etc.).

As one embodiment, the RLC303 sends data to the MAC302 or receives data from the MAC302 through a logical channel.

As one embodiment, the RLC353 sends data to the MAC352 or receives data from the MAC352 through a logical channel.

As one embodiment, the entities of a plurality of sublayers of the control plane in FIG. 3 form SRBs in the vertical direction.

As one embodiment, the entities of a plurality of sublayers of the user plane in FIG. 3 form DRBs in the vertical direction.

As one embodiment, the entities of a plurality of sublayers of the user plane in FIG. 3 form MRBs in the vertical direction.

As one embodiment, the wireless protocol architecture in FIG. 3 is applicable to the first node in the present application.

As one embodiment, the wireless protocol architecture in FIG. 3 is applicable to the second node in the present application.

As one embodiment, the first signaling in the present application is generated in the PHY301 or the PHY351.

As one embodiment, the first message in the present application is generated in the MAC302 or the MAC352.

As one embodiment, the first PDCP SDU in the present application is generated in the RRC306.

As one embodiment, the first PDCP SDU in the present application is generated in the SDAP356.

As one embodiment, the L2 layer 305 or 355 belongs to a higher layer.

As one embodiment, the RRC sublayer 306 in the L3 layer belongs to a higher layer.

As one embodiment, the data packet received by the PDCP sublayer from the upper layer is a PDCP SDU, and the data packet generated after the PDCP SDU is processed by the PDCP protocol layer is a PDCP PDU; the RLC sublayer receives an RLC SDU, i.e., a PDCP PDU, from the PDCP sublayer, and the data packet generated after the RLC SDU is processed by the RLC protocol layer is an RLC PDU; the MAC sublayer receives a MAC SDU, i.e., an RLC PDU, from the RLC sublayer, the data packet generated after the MAC SDU is processed by the MAC protocol layer is a MAC PDU, and the MAC PDU is handed over to the PHY layer protocol for processing to generate a wireless signal.

As one embodiment, one data packet can be one of the PDCP SDU, PDCP PDU, RLC SDU, RLC PDU or MAC SDU according to the different protocol layers.

### Embodiment 4

Embodiment 4 illustrates a schematic diagram of a hardware module of a communication device according to one embodiment of the present application, as shown in FIG. 4. FIG. 4 is a block diagram of a first communication device 450 and a second communication device 410 that communicate with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a data source 477, a receiving processor 470, a transmitting processor 416, a multi-antenna receiving processor 472, a multi-antenna transmitting processor 471, a transmitting device/receiving device 418, and an antenna 420.

In the transmission from the second communication device 410 to the first communication device 450, at the second communication device 410, an upper layer data packet from a core network or an upper layer data packet from the data source 477 is provided to the controller/processor 475. The core network and the data source 477 represent all protocol layers above the L2 layer. The controller/processor 475 implements the functionality of the L2 layer. In the transmission from the second communication device 410 to the first communication device 450, the controller/processor 475 provides header compression, encryption, packet segmentation and reordering, multiplexing between logical and transport channels, and wireless resource allocation to the first communication device 450 based on various priority metrics. The controller/processor 475 is also responsible for retransmission of lost packets and signaling to the first communication device 450. The transmitting processor 416 and the multi-antenna transmitting processor 471 implement various signal processing functions for the L1 layer (i.e., physical layer). The transmitting processor 416 implements encoding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more spatial streams. The transmitting processor 416 then maps each spatial stream to a subcarrier, multiplexes with a reference signal (e.g., a pilot) in the time domain and/or frequency domain, and then uses an inverse fast Fourier transform (IFFT) to generate a physical channel carrying a time domain multi-carrier symbol stream. The multi-antenna transmitting processor 471 then performs a sending analog precoding/beamforming operation on the time domain multi-carrier symbol stream. Each transmitting device 418 converts the baseband multi-carrier symbol stream provided by the multi-antenna transmitting processor 471 into a radio frequency stream, and then provides it to different antennas 420.

In the transmission from the second communication device 410 to the first communication device 450, at the first communication device 450, each receiving device 454 receives a signal through its corresponding antenna 452. Each receiving device 454 recovers the information modulated onto the radio frequency carrier, and converts the radio frequency stream into a baseband multi-carrier symbol stream and provides it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses a fast Fourier transform (FFT) to convert the baseband multi-carrier symbol stream after the receiving analog precoding/beamforming operation from the time domain to the frequency domain. In the frequency domain, the physical layer data signal and the reference signal are demultiplexed by the receiving processor 456, where the reference signal will be used for channel estimation, and the data signal is recovered after multi-antenna detection in the multi-antenna receiving processor 458 to any spatial stream with the first communication device 450 as the destination. The symbols on each spatial stream are demodulated and recovered in the receiving processor 456, and soft decisions are generated. The receiving processor 456 then decodes and deinterleaves the soft decisions to recover the upper layer data and control signals transmitted by the second communication device 410 on the physical channel. The upper layer data and control signals are then provided to the controller/processor 459. The controller/processor 459 implements the functions of the L2 layer. The controller/processor 459 may be associated with the memory 460 storing program codes and data. The memory 460 may be referred to as a computer-readable medium. In the transmission from the second communication device 410 to the first communication device 450, the controller/processor 459 provides multiplexing between transport and logical channels, packet reassembly, decryption, header decompression, control signal processing to recover higher layer data packets from the second communication device 410. The upper layer data packets are then provided to all protocol layers above the L2 layer. Various control signals may also be provided to the L3 for L3 processing.

In the transmission from the first communication device 450 to the second communication device 410, at the first communication device 450, upper layer data packets are provided to the controller/processor 459 using the data source 467. The data source 467 represents all protocol layers above the L2 layer. Similar to the sending functions at the second communication device 410 described in the transmission from the second communication device 410 to the first communication device 450, the controller/processor 459 implements header compression, encryption, packet segmentation and reordering, and multiplexing between logical and transport channels, and implements L2 layer functions for the user plane and the control plane. The controller/processor 459 is also responsible for retransmission of lost packets, and signaling to the second communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the generated spatial stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides it to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements L2 layer functions. The controller/processor 475 may be associated with the memory 476 storing program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper layer data packets from the first communication device 450. The upper layer data packets from the controller/processor 475 can be provided to the core network or all protocol layers above the L2 layer, and various control signals can also be provided to the core network or L3 for L3 processing.

As one embodiment, the first communication device 450 comprises: at least one processor and at least one memory, wherein the at least one memory comprises computer program codes; the at least one memory and the computer program codes are configured to be used together with the at least one processor, and the first communication device 450 apparatus at least: receives a first signaling, the first signaling indicating a first grant and a first time value; maintains a first type time for each data packet contained in a first set of logical channels; selects a first subset of logical channels from the first set of logical channels based on a first set of parameters; allocates resources to logical channels in the first subset of logical channels in an order from high priority to low priority; and sends a first set of data packets via the first grant, the first set of data packets comprising data packets in logical channels to which resources are allocated, wherein the first set of parameters comprises the first time value; the first set of data packets comprises at least one first type data packet, and the first type time of the first type data packet is not greater than the first time value; and the first set of logical channels comprises a plurality of logical channels, and the first subset of logical channels comprises at least one logical channel.

As one embodiment, the first communication device 450 apparatus comprises: a memory storing a computer-readable instruction program, wherein the computer-readable instruction program generates an action when executed by at least one processor, and the action comprises: receiving a first signaling, the first signaling indicating a first grant and a first time value; maintaining a first type time for each data packet contained in a first set of logical channels; selecting a first subset of logical channels from the first set of logical channels based on a first set of parameters; allocating resources to logical channels in the first subset of logical channels in an order from high priority to low priority; and sending a first set of data packets via the first grant, the first set of data packets comprising data packets in logical channels to which resources are allocated, wherein the first set of parameters comprises the first time value; the first set of data packets comprises at least one first type data packet, and the first type time of the first type data packet is not greater than the first time value; and the first set of logical channels comprises a plurality of logical channels, and the first subset of logical channels comprises at least one logical channel.

As one embodiment, the second communication device 410 apparatus comprises: at least one processor and at least one memory, wherein the at least one memory comprises computer program codes; the at least one memory and the computer program codes are configured to be used together with the at least one processor, the second communication device 410 apparatus at least: sends a first signaling, the first signaling indicating a first grant and a first time value; wherein the first type time of each data packet contained in the first set of logical channels is maintained; a first subset of logical channels is selected from the first set of logical channels according to a first set of parameters; resources are allocated to logical channels in the first subset of logical channels in an order from high priority to low priority; a first set of data packets is sent through the first grant, the first set of data packets comprising data packets in the logical channels to which resources are allocated; the first set of parameters comprises the first time value; the first set of data packets comprises at least one first type data packet, and the first type time of the first type data packet is not greater than the first time value; and the first set of logical channels comprises a plurality of logical channels, and the first subset of logical channels comprises at least one logical channel.

As one embodiment, the second communication device 410 apparatus comprises: a memory storing a computer-readable instruction program, wherein the computer-readable instruction program generates an action when executed by at least one processor, and the action comprises: sends a first signaling, the first signaling indicating a first grant and a first time value; wherein the first type time of each data packet contained in the first set of logical channels is maintained; a first subset of logical channels is selected from the first set of logical channels according to a first set of parameters; resources are allocated to logical channels in the first subset of logical channels in an order from high priority to low priority; a first set of data packets is sent through the first grant, the first set of data packets comprising data packets in the logical channels to which resources are allocated; the first set of parameters comprises the first time value; the first set of data packets comprises at least one first type data packet, and the first type time of the first type data packet is not greater than the first time value; and the first set of logical channels comprises a plurality of logical channels, and the first subset of logical channels comprises at least one logical channel.

As one embodiment, the first communication device 450 corresponds to the first node in the present application.

As one embodiment, the second communication device 410 corresponds to the second node in the present application.

As one embodiment, the first communication device 450 is one piece of UE.

As one embodiment, the first communication device 450 is one piece of Layer 2 U2N remote UE.

As one embodiment, the first communication device 450 is one Layer 3 relay node.

As one embodiment, the second communication device 410 is one base station.

As one embodiment, at least one of the antenna 420, the transmitting device 418, the multi-antenna transmitting processor 471, the transmitting processor 416 or the controller/processor 475 is used for sending the first signaling in the present application.

As one embodiment, at least one of the antenna 452, the receiving device 454, the multi-antenna receiving processor 458, the receiving processor 456 or the controller/processor 459 is used for receiving the first signaling in the present application.

As one embodiment, at least one of the antenna 452, the transmitting device 454, the multi-antenna transmitting processor 457, the transmitting processor 468 or the controller/processor 459 is used for sending the first message in the present application.

As one embodiment, at least one of the antenna 420, the receiving device 418, the multi-antenna receiving processor 472, the receiving processor 470 or the controller/processor 475 is used for receiving the first message in the present application.

As one embodiment, at least one of the antenna 452, the receiving device 454, the multi-antenna receiving processor 458, the receiving processor 456 or the controller/processor 459 is used for receiving the first PDCP SDU in the present application.

As one embodiment, at least one of the antenna 452, the transmitting device 454, the multi-antenna transmitting processor 457, the transmitting processor 468 or the controller/processor 459 is used for sending the first set of data packets in the present application.

As one embodiment, at least one of the antenna 420, the receiving device 418, the multi-antenna receiving processor 472, the receiving processor 470 or the controller/processor 475 is used for receiving the first set of data packets in the present application.

### Embodiment 5

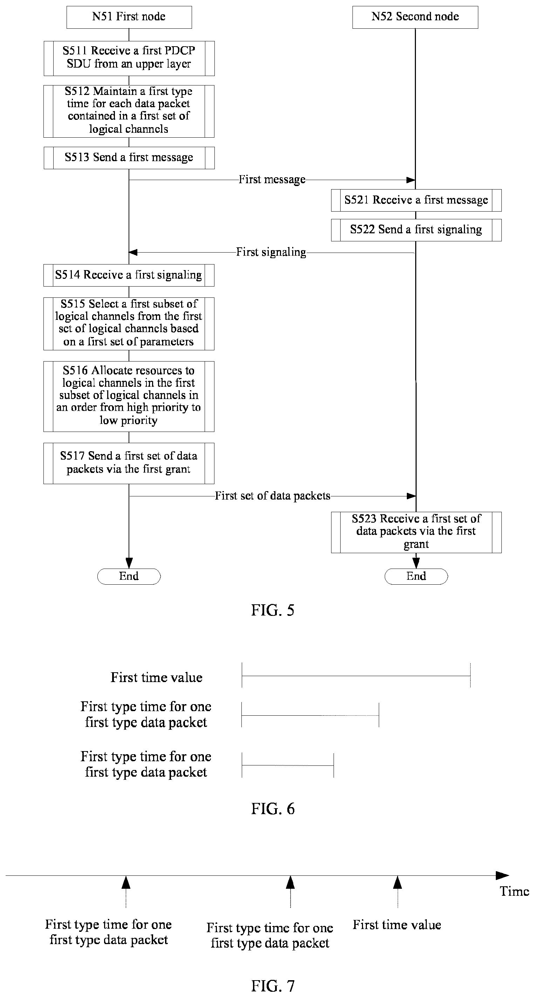

Embodiment 5 illustrates a flowchart of one wireless signal transmission according to one embodiment of the present application, as shown in FIG. 5. In FIG. 5, a first node N51 and a second node N52 communicate through an air interface. It is particularly noted that the order in this example does not limit the signal transmission order and implementation order in the present application.

For **the first node N51,** in step S511, a first PDCP SDU is received from an upper layer; in step S512, a first type time of each data packet contained in a first set of logical channels is maintained; in step S513, a first message is sent; in step S514, a first signaling is received; in step S515, a first subset of logical channels is selected from the first set of logical channels according to a first set of parameters; in step S516, resources are allocated to the logical channels in the first subset of logical channels in an order from high priority to low priority; and in step S517, a first set of data packets is transmitted through a first grant.

For **the second node** N52, a first message is received in step S521; in step S522, a first signaling is sent; and in step S523, a first set of data packets is received through a first grant.

In Embodiment 5, the first signaling is received, the first signaling indicating a first grant and a first time value; a first type time for each data packet contained in a first set of logical channels is maintained; a first subset of logical channels from the first set of logical channels based on a first set of parameters is selected; resources are allocated to logical channels in the first subset of logical channels in an order from high priority to low priority; and a first set of data packets is sent via the first grant, the first set of data packets comprising data packets in logical channels to which resources are allocated, wherein the first set of parameters comprises the first time value; the first set of data packets comprises at least one first type data packet, and the first type time of the first type data packet is not greater than the first time value; and the first set of logical channels comprises a plurality of logical channels, and the first subset of logical channels comprises at least one logical channel; a first message is sent, the first message being used for triggering the first signaling, wherein the first message indicates a second time value and a first data volume, and the second time value indicates a latest sending time of a data packet of the first data volume; a first PDCP SDU is received from an upper layer, the first PDCP SDU being used for generating a first data packet, and the first data packet being any data packet contained in the first set of logical channels, wherein the first PDCP SDU is associated with a third time value, and a residence time of the first PDCP SDU at the first node and the third time value are used for determining the first type time of the first data packet.

It should be noted that Embodiment 5 shows a scenario in which the first signaling indicates an uplink grant, and the recipient of the first set of data packets is the second node.

As one embodiment, when the first signaling indicates a sidelink grant, the recipient of the first set of data packets is a node other than the second node.

As one embodiment, the second node N52 is a maintaining base station of a serving cell of the first node N51.

As one embodiment, the second node N52 is a transmit/receive point (TRP) of a serving cell of the first node N51.

As one embodiment, the second node N52 is a maintaining base station of a master cell group (MCG) of the first node N51.

As one embodiment, the second node N52 is a maintaining base station of a secondary cell group (SCG) of the first node N51.

As one embodiment, the second node N52 is a MgNB (master gNB).

As one embodiment, the second node N52 is a SgNB (secondary gNB).

As one embodiment, a first PDCP SDU is received from an upper layer.

As one embodiment, the upper layer is an RRC (Radio Resource Control) layer.

As one embodiment, the upper layer is an SDAP (Service Data Adaptation Protocol) layer.

As one embodiment, the upper layer is an IP (Internet Protocol) layer.

As one embodiment, the first PDCP SDU is used for generating a first data packet.

As one embodiment, at least part of the bits of the first PDCP SDU are used for generating a first data packet.

As one embodiment, the first PDCP SDU is generated as a first data packet after being processed by the protocol layer.

As one embodiment, the protocol layer comprises at least one of a PDCP sublayer or an RLC (Radio Link Control) sublayer.

As one embodiment, the first data packet is a MAC SDU.

As one embodiment, the first data packet is any data packet contained in the first set of logical channels.

As one embodiment, the first data packet being any data packet contained in the first set of logical channels means that the first data packet is sent at the lower layer through at least one of the logical channels in the first set of logical channels.

As one embodiment, the first PDCP SDU is sent through at least one logical channel included in the first set of logical channels after being processed by the lower protocol layer.

As one embodiment, the first PDCP SDU is associated with a third time value.

As one embodiment, the third time value indicates the longest residence time of the first PDCP SDU at the first node.

As one embodiment, the third time value is a data packet delay budget of the first PDCP SDU.

As one embodiment, as a response to receiving the first PDCP SDU, one timer is started, and the expiration value of the one timer is the third time value.

As one embodiment, the one timer is a discardTimer.

As one embodiment, at least the latter of the residence time of the first PDCP SDU at the first node and the third time value is used for determining the first type time of the first data packet.

As one embodiment, the third time value is used for determining the first type time of the first data packet.

As one embodiment, the receiving time of the first PDCP SDU and the third time value are used for determining the first type time of the first data packet.

As one embodiment, the receiving time of the first PDCP SDU plus the third time value is the first type time of the first data packet.

As one embodiment, the receiving slot of the first PDCP SDU plus the number of slots indicated by the third time value is the first type time of the first data packet.

As one sub-embodiment of the above three embodiments, the first type time of the first data packet is the latest sending time.

As one embodiment, the residence time of the first PDCP SDU at the first node and the third time value are used together to determine the first type time of the first data packet.

As one embodiment, the third time value minus the residence time of the first PDCP SDU at the first node is the first type time of the first data packet.

As one sub-embodiment of the above two embodiments, the first type time of the first data packet is the remaining data packet delay budget of the first data packet.

As one embodiment, the residence time of the first PDCP SDU at the first node comprises a buffering time and processing time of the first PDCP SDU at the first node.

As one embodiment, the residence time of the first PDCP SDU at the first node is the current value of a timer associated with the first PDCP SDU.

As one sub-embodiment of the above embodiment, the timer starts counting from 0.

As one embodiment, the residence time of the first PDCP SDU at the first node is the difference between the third time value and the current value of a timer associated with the first PDCP SDU.

As one sub-embodiment of the above embodiment, the timer starts counting down from the third time value.

As one embodiment, a first message is sent.

As one embodiment, the first message is a MAC sublayer message.

As one embodiment, the first message is a MAC CE.

As one embodiment, the first message is a BSR (Buffer Status Report).

As one embodiment, the first message is an enhanced BSR.

As one embodiment, the first message is used for triggering the first signaling.

As one embodiment, the sending of the first signaling depends on the first message.

As one embodiment, the first message is used to requesting uplink scheduling.

As one embodiment, the first message is used to requesting sidelink scheduling.

As one embodiment, the first message is sent periodically.

As one embodiment, the first message is sent through event triggering.

As one embodiment, the event comprises that the minimum value of the first type time of the data packets included in the first set of logical channels is not greater than the preset value.

As one embodiment, the event comprises that data arrives in one logical channel in the first set of logical channels, and the priority of the logical channel configured by the network is higher than that of other logical channels.

As one embodiment, the event comprises that the first node obtains an uplink grant, and the uplink grant indicates that there are remaining resources to accommodate the first message.

As one embodiment, the first message indicates a cached data volume and the remaining time of the cached data.

As one embodiment, the first message indicates a second time value and a first data volume.

As one embodiment, the second time value is related to the data packet of the first data volume.

As one embodiment, the first message comprises the second time value and the first data volume.

As one embodiment, the first message comprises a second field, the second field indicates a second index, and a value indicated by the second index in a second list is the second time value.

As one embodiment, the first list and the second list are the same list.

As one embodiment, the first list and the second list are two different lists.

As one embodiment, the first node saves the first list and the second list.

As one embodiment, the second time value is obtained when the first message is sent.

As one embodiment, the second time value is the first type time of the data packet of the first data volume when the first message is sent.

As one embodiment, the second time value is the minimum value of the first type variable of the data packets included in the first set of logical channels when the first message is transmitted.

As one sub-embodiment of the above embodiment, the first data volume is the data volume of the data packets whose first type variable is the second time value of the data packets included in the first set of logical channels when the first message is sent.

As one embodiment, the first message implicitly indicates the second time value.

As one embodiment, the first message comprises only the first data volume; and the first message implicitly indicates the second time value.

As one sub-embodiment of the above embodiment, the second time value is the minimum value of the first type time of the data packets included in the first set of logical channels, and when the second time value is not greater than the preset time value, the sending of the first message is triggered.

As one embodiment, the second time value indicates the latest sending time of the data packet of the first data volume.

As one embodiment, the second time value explicitly indicates the latest sending time of the data packet of the first data volume.

As one embodiment, the second time value is the latest sending slot of the data packet of the first data volume.

As one embodiment, the second time value comprises at least the former of a slot number and a system frame number.

As one embodiment, when the second time value comprises only the slot number, the second time value indicates the slot in the system frame where the first message is sent.

As one embodiment, when the second time value comprises the slot number and the system frame number, the second time value indicates the slot in the system frame.

As one embodiment, the second time value implicitly indicates the latest sending time of the data packet of the first data volume.

As one embodiment, the second time value is the remaining data packet delay budget of the data packet of the first data volume.

As one embodiment, the second time value is the remaining PSDB (PDU Set Delay Budget) of the data packet of the first data volume.

As one embodiment, the sending time of the first message plus the second time value is the latest sending time of the data packet of the first data volume.

As one embodiment, the unit of the second time value is slot.

As one embodiment, the unit of the second time value is millisecond.

As one embodiment, the unit of the second time value is symbol.

As one embodiment, the data packet of the first data volume belongs to the first set of logical channels.

As one embodiment, the data packet of the first data volume comprises bytes with the number being equal to the first data volume.

As one embodiment, the unit of the first data volume is byte.

### Embodiment 6

Embodiment 6 illustrates a schematic diagram of a relationship between a first time value and a first type time of a first type data packet according to one embodiment of the present application, as shown in FIG. 6.

As one embodiment, the first type time of each data packet contained in the first set of logical channels is a remaining data packet delay budget.

As one embodiment, the first type time of the first type data packet is not greater than the first time value.

As one embodiment, the first time value is independent of the second time value.

As one embodiment, the first time value is determined by the second node itself in the present application.

As one embodiment, the first time value is related to the second time value.

As one embodiment, the first time value is determined by the second node itself in the present application according to the second time value.

As one embodiment, the first time value is not greater than the second time value.

As one embodiment, the second time value indicates a remaining data packet delay budget.

As one embodiment, the first time value indicates a reference data packet delay budget.

As one embodiment, the first time value depends on the second time value and a first time length.

As one embodiment, the difference of the second time value minus the first time length is the first time value.

As one embodiment, the difference of the second time value minus the first time length plus the second offset value is the first time value.

As one embodiment, the second offset value is determined by the second node itself in the present application.

As one embodiment, the first time length is a time interval from the sending of the first message to the time domain resource indicated by the first grant.

As one embodiment, a sending time of the first message is a first sending time of the first message.

As one embodiment, a sending time of the first message is a start time of the first sending of the first message.

As one embodiment, a sending time of the first message is an end time of the first sending of the first message.

As one embodiment, when the first message is not correctly received when it is first sent, the first message is scheduled for retransmission, and the second node in the present application obtains the first sending time of the first message according to the sending time indicated by the new transmission and retransmission scheduling, respectively.

As one embodiment, the time domain resource indicated by the first grant is not later than the time indicated by the first time value after the receiving time of the first signaling.

### Embodiment 7

Embodiment 7 illustrates a schematic diagram of a relationship between a first time value and a first type time of a first type data packet according to one embodiment of the present application, as shown in FIG. 7.

As one embodiment, the first type time of each data packet contained in the first set of logical channels is a latest sending time.

As one embodiment, the first type time of the first type data packet is not later than the first time value.

As one embodiment, the first type time indicates a latest sending time, and the first time value indicates a reference sending time.

As one embodiment, the second time value explicitly indicates the latest sending time of the data packet of the first data volume.

As one embodiment, the time domain resources indicated by the first grant are not later than the second time value.

As one embodiment, the time domain resources indicated by the first grant are not later than the slot indicated by the second time value.

As one embodiment, the first time value is earlier than the second time value and later than the time domain resources indicated by the first grant.

As one embodiment, the first time value is later than the second time value.

As one embodiment, the first time value is equal to the second time value.

As one embodiment, the time domain resources indicated by the first grant are not later than the first time value.

As one embodiment, the time domain resources indicated by the first grant are not later than the slot indicated by the first time value.

As one embodiment, a time interval between the first time value and the time domain resources indicated by the first grant is determined by the second node of the present application.

As one embodiment, the first node does not expect to receive a scheduling signaling after the first signaling and before the first time value.

### Embodiment 8

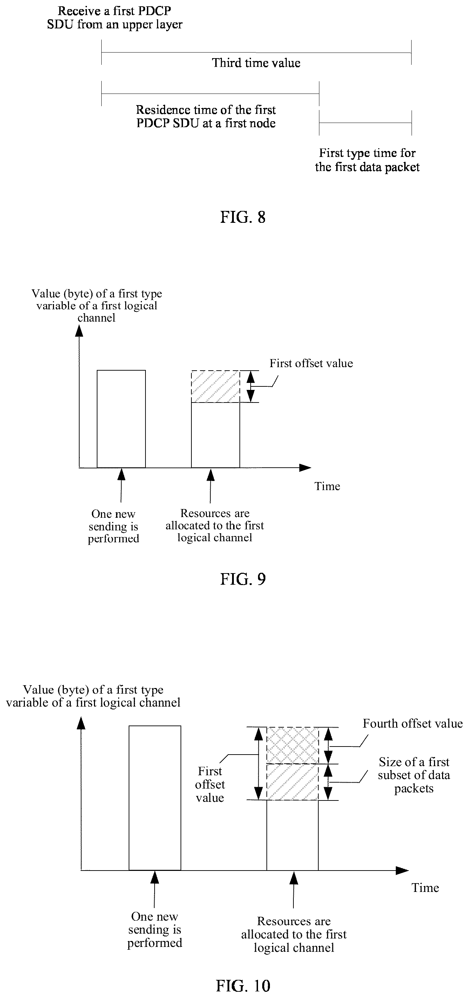

Embodiment 8 illustrates a schematic diagram of a relationship among a third time value, a residence time of a first PDCP SDU at a first node, and a first type time of a first data packet according to one embodiment of the present application, as shown in FIG. 8.

As one embodiment, the third time value minus the residence time of the first PDCP SDU at the first node is the first type time of the first data packet.

As one embodiment, the third time value is configured by the network.

As one embodiment, all data packets included in the logical channel to which the first data packet belongs are associated with the third time value.

As one embodiment, all data packets included in a radio bearer to which the first data packet belongs are associated with the third time value.

As one embodiment, a PDCP entity receiving the first PDCP SDU is configured with the third time value.

As one embodiment, the first type time of the first data packet is determined by the first node.

As one embodiment, the first type time of the first data packet is indicated by the PDCP sublayer of the first node.

As one embodiment, the first type time of the first data packet is indicated by the PDCP sublayer of the first node to the MAC sublayer of the first node.

As one embodiment, the first type time of the first data packet is indicated by the PDCP sublayer of the first node to the RLC sublayer of the first node.

### Embodiment 9

Embodiment 9 illustrates a schematic diagram of a relationship between a first type variable of a first logical channel and a first offset value according to one embodiment of the present application, as shown in FIG. 9. Embodiment 9 is applicable to the case where the first type variable of the first logical channel is greater than 0.

As one embodiment, a first offset value is subtracted from the first type variable of the first logical channel, wherein the first logical channel is one of the logical channels to which resources are allocated in the first subset of logical channels.

As one embodiment, the first transmitter maintains the first type variable of the first logical channel.

As one embodiment, the behavior of maintaining the first type variable of the first logical channel comprises: when a new sending is performed, the first type variable of the first logical channel is incremented by a third offset value.

As one embodiment, the behavior of maintaining the first type variable of the first logical channel comprises: when resources are allocated to the first logical channel, a first offset value is subtracted from the first type variable of the first logical channel, the first offset value being related to whether the first type variable of the first logical channel is greater than 0.

As one embodiment, the behavior of maintaining the first type variable of the first logical channel comprises: when the value of the first type variable of the first logical channel is greater than a first threshold, the first type variable of the first logical channel is set to the first threshold.

As one embodiment, the first threshold is PBR_1×BSD.

As one embodiment, one new sending is the first sending of one TB (Transport Block).

As one embodiment, one new sending is one sending other than one TB retransmission.

As one embodiment, one new sending is the first sending in one TB repetition.

As one embodiment, the first sending of one TB comprises: there is no previous NDI (New Data Indication) for the TB block.

As one embodiment, the first sending of one TB comprises: toggling the NDI carried by control information; the control information is used for indicating the time-frequency resources for sending the TB block.

As one embodiment, when one new sending is performed, the logical channel prioritization (LCP) procedure is applied.

As one embodiment, before the logical channel prioritization procedure (LCP) instance, the first type variable of the first logical channel is incremented by the third offset value.

As one embodiment, the third offset value is an integer not less than 0.

As one embodiment, the third offset value is PBR_1×T_1.

As one embodiment, the PBR_1 is a priority bit rate of the first logical channel; and the PBR_1 is configured to the first logical channel by the RRC sublayer.

As one embodiment, the BSD (Bucket Size Duration) is the bucket size duration of the first logical channel; and the BSD is configured to the first logical channel by the RRC sublayer.

As one embodiment, the T_1 is an elapsed time from the last increment to the current increment of the first type variable of the first logical channel.

As one embodiment, the T_1 is an elapsed time from the last increment to the current new sending of the first type variable of the first logical channel.

As one embodiment, the first offset value increments with the increment of the T_1 value.

As one embodiment, when a new sending is executed, the first type variable of the first logical channel is incremented by the third offset value; and when the value of the first type variable of the first logical channel is greater than the first threshold, the first type variable of the first logical channel is set to the first threshold.

As one embodiment, when a new sending is performed, the value of the first type variable of the first logical channel, the third offset value and the first threshold are used for determining the value of the first type variable of the first logical channel when a next new sending is performed.

As one embodiment, when a new sending is performed, the value of the first type variable of the first logical channel, the third offset value, the first threshold and the first offset value are used for determining the value of the first type variable of the first logical channel when the new sending is performed and resources are allocated to the first logical channel.

As one embodiment, the first offset value is at least related to the resources allocated to the first logical channel.

As one embodiment, the first offset value is related to whether the first type variable of the first logical channel is greater than 0.

As one embodiment, when the first type variable of the first logical channel is greater than 0, the first offset value is the size of the first subset of data packets.

As one embodiment, the size of the first subset of data packets is the number of bytes included in the first subset of data packets.

As one embodiment, the resources allocated to the first logical channel are used for sending the first subset of data packets.

As one embodiment, the first subset of data packets belongs to the first set of data packets.

As one embodiment, the first subset of data packets belongs to the first logical channel.

As one embodiment, the first subset of data packets comprises the first type data packets of the first logical channel.

As one embodiment, the first subset of data packets is a MAC SDU.

FIG. 9 shows the case where the first offset value is the size of the first subset of data packets when the first type variable of the first logical channel is greater than 0, wherein the blank block on the left in FIG. 9 represents the value of the first type variable of the first logical channel when a new sending is performed, the oblique line block on the right in FIG. 9 represents the size of the first subset of data packets, and the blank box on the right in FIG. 9 represents the first type variable of the first logical channel after the update, and the new transmission is scheduled by the first signaling.

### Embodiment 10

Embodiment 10 illustrates a schematic diagram of a relationship between a first type variable of a first logical channel and a first offset value according to one embodiment of the present application, as shown in FIG. 10. Embodiment 10 is applicable to the case where the first type variable of the first logical channel is not greater than 0.

As one embodiment, when the first type variable of the first logical channel is not greater than 0, the first offset value is the sum of the size of the first subset of data packets and a fourth offset value.

As one embodiment, the fourth offset value is a positive integer greater than 0.

As one embodiment, the fourth offset value is related to the size of the first subset of data packets.

As one embodiment, the fourth offset value is the size of the first subset of data packets.

As one embodiment, the fourth offset value is the size of the first subset of data packets multiplied by a first factor, wherein the first factor is a value greater than 0 and not greater than 1.

FIG. 10 shows the case where the first offset value is the sum of the size of the first subset of data packets and the fourth offset value when the first type variable of the first logical channel is not greater than 0, wherein the blank block on the left of FIG. 10 represents the value of the first type variable of the first logical channel when a new sending is performed, the oblique line block in FIG. 10 represents the size of the first subset of data packets, the grid block in FIG. 10 represents the fourth offset value, and the blank block on the right of FIG. 10 represents the first type variable of the first logical channel after the update, and the one new sending is scheduled by the first signaling.

As one embodiment, when the first type variable of the first logical channel is not greater than 0, according to the traditional LCP procedure, the first logical channel is not selected for sending. At this time, the first type data packets included in the first logical channel are not sent, which may cause packet loss due to exceeding the data packet delay budget.

As one embodiment, according to the method in Embodiment 10, when the first type variable of the first logical channel is not greater than 0, if the first logical channel comprises the first type data packets, the first logical channel can still be selected for sending, which can effectively prioritize delay-sensitive services for sending, thereby reducing packet loss.

As one embodiment, the method in Embodiment 10 adds a fourth offset value to the first offset value of the first logical channel whose first type variable is not greater than 0, which can support scheduling fairness.

### Embodiment 11

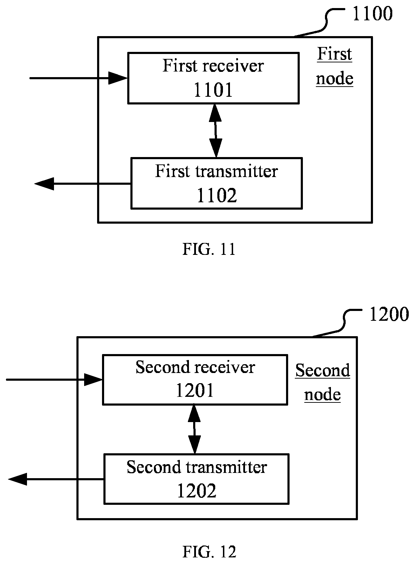

Embodiment 11 illustrates a structural block diagram of a processing apparatus in a first node according to one embodiment of the present application, as shown in FIG. 11.

In FIG. 11, a first node processing apparatus 1100 comprises a first receiver 1101 and a first transmitter 1102. The first node 1100 is one piece of UE.

In Embodiment 11, the first receiver 1101 receives a first signaling, the first signaling indicating a first grant and a first time value; and the first transmitter 1102 maintains a first type time of each data packet contained in a first set of logical channels; selects a first subset of logical channels from the first set of logical channels based on a first set of parameters; allocates resources to logical channels in the first subset of logical channels in an order from high priority to low priority; sends a first set of data packets via the first grant, the first set of data packets comprising data packets in logical channels to which resources are allocated, wherein the first set of parameters comprises the first time value; the first set of data packets comprises at least one first type data packet, the first type time of the first type data packet is not greater than the first time value; and the first set of logical channels comprises a plurality of logical channels, and the first subset of logical channels comprises at least one logical channel.

As one embodiment, any logical channel in the first subset of logical channels comprises at least one first type data packet.

As one embodiment, the first transmitter 1102 transmits a first message, the first message being used for triggering the first signaling, wherein the first message indicates a second time value and a first data volume, and the second time value indicates a latest sending time of a data packet of the first data volume.

As one embodiment, the first type time of the first type data packet being not greater than the first time value comprises: the first type time of the first type data packet being not later than the first time value, wherein the first type time indicates a latest sending time, and the first time value indicates a reference sending time.

As one embodiment, the first type time of each data packet contained in the first set of logical channels is a remaining data packet delay budget.

As one embodiment, the first receiver 1101 receives a first PDCP SDU from an upper layer, the first PDCP SDU being used for generating a first data packet, and the first data packet being any data packet contained in the first set of logical channels, wherein the first PDCP SDU is associated with a third time value, and at least the latter of a residence time of the first PDCP SDU at the first node and the third time value is used for determining the first type time of the first data packet.

As one embodiment, the first transmitter 1102 subtracts a first offset value from a first type variable of a first logical channel, the first offset value being related to whether the first type variable of the first logical channel is greater than 0, wherein the first logical channel is one of the logical channels to which resources are allocated in the first subset of logical channels.

As one embodiment, the first receiver 1101 comprises the receiving device 454 (comprising the antenna 452), the receiving processor 456, the multi-antenna receiving processor 458 and the controller/processor 459 in FIG. 4 of the present application.

As one embodiment, the first receiver 1101 comprises at least one of the receiving device 454 (comprising the antenna 452), the receiving processor 456, the multi-antenna receiving processor 458 or the controller/processor 459 in FIG. 4 of the present application.

As one embodiment, the first transmitter 1102 comprises the transmitting device 454 (comprising the antenna 452), the transmitting processor 468, the multi-antenna transmitting processor 457 and the controller/processor 459 in FIG. 4 of the present application.

As one embodiment, the first transmitter 1102 comprises at least one of the transmitting device 454 (comprising the antenna 452), the transmitting processor 468, the multi-antenna transmitting processor 457 or the controller/processor 459 in FIG. 4 of the present application.

### Embodiment 12

Embodiment 12 illustrates a structural block diagram of a processing apparatus in a second node according to one embodiment of the present application, as shown in FIG. 12. In FIG. 12, a second node processing apparatus 1200 comprises a second receiver 1201 and a second transmitter 1202; and the second node 1200 is a base station.

In Embodiment 12, the second transmitter 1202 sends a first signaling, the first signaling indicating a first grant and a first time value, wherein the first type time of each data packet contained in the first set of logical channels is maintained; a first subset of logical channels is selected from the first set of logical channels according to a first set of parameters; resources are allocated to logical channels in the first subset of logical channels in an order from high priority to low priority; a first set of data packets is sent through the first grant, the first set of data packets comprising data packets in the logical channels to which resources are allocated; the first set of parameters comprises the first time value; the first set of data packets comprises at least one first type data packet, the first type time of the first type data packet is not greater than the first time value; and the first set of logical channels comprises a plurality of logical channels, and the first subset of logical channels comprises at least one logical channel.

As one embodiment, any logical channel in the first subset of logical channels comprises at least one first type data packet.

As one embodiment, the second receiver 1201 receives a first message, the first message being used for triggering the first signaling, wherein the first message indicates a second time value and a first data volume, and the second time value indicates a latest sending time of a data packet of the first data volume.

As one embodiment, the first type time of the first type data packet being not greater than the first time value comprises: the first type time of the first type data packet being not later than the first time value, wherein the first type time indicates a latest sending time, and the first time value indicates a reference sending time.

As one embodiment, the first type time of each data packet contained in the first set of logical channels is a remaining data packet delay budget.

As one embodiment, a first PDCP SDU is received from an upper layer, the first PDCP SDU is used for generating a first data packet, the first data packet is any data packet contained in the first set of logical channels, wherein the first PDCP SDU is associated with a third time value, and at least the latter of a residence time of the first PDCP SDU at a recipient of the first signaling and the third time value is used for determining the first type time of the first data packet.

As one embodiment, a first offset value is subtracted from a first type variable of the first logical channel, the first offset value being related to whether the first type variable of the first logical channel is greater than 0, wherein the first logical channel is one of the logical channels to which resources are allocated in the first subset of logical channels.

As one embodiment, the second receiver 1201 comprises the transmitting device 418 (comprising the antenna 420), the receiving processor 470, the multi-antenna receiving processor 472 and the controller/processor 475 in FIG. 4 of the present application.

As one embodiment, the second receiver 1201 comprises at least one of the transmitting device 418 (comprising the antenna 420), the receiving processor 470, the multi-antenna receiving processor 472 or the controller/processor 475 in FIG. 4 of the present application.

As one embodiment, the second transmitter 1202 comprises the transmitting device 418 (comprising the antenna 420), the transmitting processor 416, the multi-antenna transmitting processor 471 and the controller/processor 475 in FIG. 4 of the present application.

As one embodiment, the second transmitter 1202 comprises at least one of the transmitting device 418 (comprising antenna 420), the transmitting processor 416, the multi-antenna transmitting processor 471 or the controller/processor 475 in FIG. 4 of the present application.

Those of ordinary skill in the art can understand that all or part of the steps in the above method can be completed by instructing the relevant hardware through a program, and the program can be stored in a computer-readable storage medium, such as a read-only memory, a hard disk or an optical disk. Optionally, all or part of the steps in the above embodiments can also be implemented using one or more integrated circuits. Accordingly, each module unit in the above embodiment can be implemented in the form of hardware or in the form of a software function module. The present application is not limited to any specific form of software and hardware combination. The first type of communication node or UE or terminal in the present application includes but is not limited to mobile phones, tablet computers, notebooks, network cards, lowpower devices, enhanced machine type communication (eMTC) devices, NB-IoT devices, vehiclemounted communication devices, aircrafts, airplanes, drones, remote-controlled aircrafts and other wireless communication devices. The second type of communication nodes or base stations or network side devices in the present application include but are not limited to macrocell base stations, microcell base stations, home base stations, relay base stations, eNBs, gNBs, transmission and reception points (TRPs), relay satellites, satellite base stations, aerial base stations, test equipment, such as transceiving apparatuses that simulate some functions of base stations, signaling testers and other wireless communication devices.

Those skilled in the art should understand that the present invention can be implemented in other specified forms without departing from its core or basic features. Therefore, the embodiments disclosed herein should be regarded as descriptive rather than restrictive in any way. The scope of the present invention is determined by the attached claims rather than the previous description, and all changes within the equivalent meaning and area are considered to be included therein.

## Claims

1. A first node used in wireless communication, comprising:
a first receiver for receiving a first signaling, the first signaling indicating a first grant and a first time value; and
a first transmitter for maintaining a first type time for each data packet contained in a first set of logical channels; selecting a first subset of logical channels from the first set of logical channels based on a first set of parameters; allocating resources to logical channels in the first subset of logical channels in an order from high priority to low priority; and sending a first set of data packets via the first grant, the first set of data packets comprising data packets in logical channels to which resources are allocated,
wherein the first set of parameters comprises the first time value; the first set of data packets comprises at least one first type data packet, the first type time of the first type data packet is not greater than the first time value; and the first set of logical channels comprises a plurality of logical channels, and the first subset of logical channels comprises at least one logical channel.

2. The first node according to claim 1, wherein any logical channel in the first subset of logical channels comprises at least one of the first type data packets.

3. The first node according to claim 1 or 2, comprising:
the first transmitter for sending a first message, the first message being used for triggering the first signaling,
wherein the first message indicates a second time value and a first data volume, and the second time value indicates a latest sending time of a data packet of the first data volume.

4. The first node according to any one of claims 1 to 3, wherein the first type time of the first type data packet being not greater than the first time value comprises: the first type time of the first type data packet being not later than the first time value,
wherein the first type time indicates a latest sending time, and the first time value indicates a reference sending time.

5. The first node according to any one of claims 1 to 3, wherein the first type time of each data packet contained in the first set of logical channels is a remaining data packet delay budget.

6. The first node according to any one of claims 1 to 5, comprising:
the first receiver for receiving a first PDCP SDU from an upper layer, the first PDCP SDU being used for generating a first data packet, and the first data packet being any data packet contained in the first set of logical channels,
wherein the first PDCP SDU is associated with a third time value, and at least the latter of a residence time of the first PDCP SDU at the first node and the third time value is used for determining the first type time of the first data packet.

7. The first node according to any one of claims 1 to 6, comprising:
the first transmitter for subtracting a first offset value from a first type variable of a first logical channel, the first offset value being related to whether the first type variable of the first logical channel is greater than 0,
wherein the first logical channel is one of the logical channels to which resources are allocated in the first subset of logical channels.

8. A second node used in wireless communication, comprising:
a second transmitter for sending a first signaling, the first signaling indicating a first grant and a first time value; and
a second receiver for receiving a first set of data packets, the first set of data packets being sent via the first grant,
wherein the first type time of each data packet contained in the first set of logical channels is maintained; a first subset of logical channels is selected from the first set of logical channels according to a first set of parameters; resources are allocated to logical channels in the first subset of logical channels in an order from high priority to low priority; the first set of data packets comprises data packets in the logical channels to which resources are allocated; the first set of parameters comprises the first time value; the first set of data packets comprises at least one first type data packet, the first type time of the first type data packet is not greater than the first time value; and the first set of logical channels comprises a plurality of logical channels, and the first subset of logical channels comprises at least one logical channel.

9. The second node according to claim 8, wherein any logical channel in the first subset of logical channels comprises at least one of the first type data packets.

10. The second node according to claim 8 or 9, comprising:
the second receiver for receiving a first message, the first message being used for triggering the first signaling,
wherein the first message indicates a second time value and a first data volume, and the second time value indicates a latest sending time of a data packet of the first data volume.

11. The second node according to any one of claims 8 to 10, wherein the first type time of the first type data packet being not greater than the first time value comprises: the first type time of the first type data packet being not later than the first time value,
wherein the first type time indicates a latest sending time, and the first time value indicates a reference sending time.

12. The second node according to any one of claims 8 to 10, wherein the first type time of each data packet contained in the first set of logical channels is a remaining data packet delay budget.

13. The second node according to any one of claims 8 to 12, wherein a first PDCP SDU is received from an upper layer, the first PDCP SDU is used for generating a first data packet, and the first data packet is any data packet contained in the first set of logical channels,
wherein the first PDCP SDU is associated with a third time value, and at least the latter of a residence time of the first PDCP SDU at a recipient of the first signaling and the third time value is used for determining the first type time of the first data packet.

14. The second node according to any one of claims 8 to 13, wherein a first offset value is subtracted from a first type variable of the first logical channel, the first offset value being related to whether the first type variable of the first logical channel is greater than 0,
wherein the first logical channel is one of the logical channels to which resources are allocated in the first subset of logical channels.

15. A method used in a first node for wireless communication, comprising:
receiving a first signaling, the first signaling indicating a first grant and a first time value;
maintaining a first type time for each data packet contained in a first set of logical channels;
selecting a first subset of logical channels from the first set of logical channels based on a first set of parameters;
allocating resources to logical channels in the first subset of logical channels in an order from high priority to low priority; and
sending a first set of data packets via the first grant, the first set of data packets comprising data packets in logical channels to which resources are allocated,
wherein the first set of parameters comprises the first time value; the first set of data packets comprises at least one first type data packet, the first type time of the first type data packet is not greater than the first time value; and the first set of logical channels comprises a plurality of logical channels, and the first subset of logical channels comprises at least one logical channel.

16. The method used in the first node according to claim 15, wherein any logical channel in the first subset of logical channels comprises at least one first type data packet.

17. The method used in the first node according to claim 15 or 16, comprising:
sending a first message, the first message being used for triggering the first signaling,
wherein the first message indicates a second time value and a first data volume, and the second time value indicates a latest sending time of a data packet of the first data volume.

18. The method used in the first node according to any one of claims 15 to 17, wherein the first type time of the first type data packet being not greater than the first time value comprises: the first type time of the first type data packet being not later than the first time value,
wherein the first type time indicates a latest sending time, and the first time value indicates a reference sending time.

19. The method used in the first node according to any one of claims 15 to 17, wherein the first type time of each data packet contained in the first set of logical channels is a remaining data packet delay budget.

20. The method used in the first node according to any one of claims 15 to 19, comprising:
receiving a first PDCP SDU from an upper layer, the first PDCP SDU being used for generating a first data packet, and the first data packet being any data packet contained in the first set of logical channels,
wherein the first PDCP SDU is associated with a third time value, and at least the latter of a residence time of the first PDCP SDU at the first node and the third time value is used for determining the first type time of the first data packet.

21. The method used in the first node according to any one of claims 15 to 20, comprising:
subtracting a first offset value from a first type variable of a first logical channel, the first offset value being related to whether the first type variable of the first logical channel is greater than 0,
wherein the first logical channel is one of the logical channels to which resources are allocated in the first subset of logical channels.

22. A method used in a second node for wireless communication, comprising:
sending a first signaling, the first signaling indicating a first grant and a first time value; and
receiving a first set of data packets, the first set of data packets being sent through the first grant,
wherein the first type time of each data packet contained in the first set of logical channels is maintained; a first subset of logical channels is selected from the first set of logical channels according to a first set of parameters; resources are allocated to logical channels in the first subset of logical channels in an order from high priority to low priority; the first set of data packets comprises data packets in the logical channels to which resources are allocated; the first set of parameters comprises the first time value; the first set of data packets comprises at least one first type data packet, the first type time of the first type data packet is not greater than the first time value; and the first set of logical channels comprises a plurality of logical channels, and the first subset of logical channels comprises at least one logical channel.

23. The method used in the second node according to claim 22, wherein any logical channel in the first subset of logical channels comprises at least one of the first type data packets.

24. The method used in the second node according to claim 22 or 23, comprising:
receiving a first message, the first message being used for triggering the first signaling,
wherein the first message indicates a second time value and a first data volume, and the second time value indicates a latest sending time of a data packet of the first data volume.

25. The method used in the second node according to any one of claims 22 to 24, wherein the first type time of the first type data packet being not greater than the first time value comprises: the first type time of the first type data packet is not later than the first time value,
wherein the first type time indicates a latest sending time, and the first time value indicates a reference sending time.

26. The method used in the second node according to any one of claims 22 to 24, wherein the first type time of each data packet contained in the first set of logical channels is a remaining data packet delay budget.

27. The method used in the second node according to any one of claims 22 to 26, wherein a first PDCP SDU is received from an upper layer, the first PDCP SDU is used for generating a first data packet, and the first data packet is any data packet contained in the first set of logical channels,
wherein the first PDCP SDU is associated with a third time value, and at least the latter of a residence time of the first PDCP SDU at a recipient of the first signaling and the third time value is used for determining the first type time of the first data packet.

28. The method used in the second node according to any one of claims 22 to 27, wherein a first offset value is subtracted from a first type variable of the first logical channel, the first offset value being related to whether the first type variable of the first logical channel is greater than 0,
wherein the first logical channel is one of the logical channels to which resources are allocated in the first subset of logical channels.
